# EUROPÄISCHE PATENTSCHRIFT

(11) **EP 0 619 693 B1**
(45) Veröffentlichungstag und Bekanntmachung des Hinweises auf die Patenterteilung: **20.05.1998**
(21) Anmeldenummer: 94810076.3
(22) Anmeldetag: 10.02.1994
(51) Int. Cl.: H05B 6/12

(54) **Induktionskochstelle**
Induction cooking place
Place de cuisson par induction

(30) Priorität: 06.04.1993 CH 1048/93
(43) Veröffentlichungstag der Anmeldung: 12.10.1994
(73) Patentinhaber: Haelg, Robert, CH-8406 Winterthur (CH)
(72) Erfinder: Haelg,Robert, CH-8406 Winterthur (CH); Bottarlini,Ricardo, CH-8615 Wermatswil (CH); Kilchherr,Peter, CH-8103 Unterengstringen (CH)
(74) Vertreter: Feldmann, Clarence Paul

(56) Entgegenhaltungen:
- DE-A- 2 231 339
- US-A- 3 786 222
- US-A- 4 833 288

## Beschreibung

Die vorliegende Erfindung betrifft ein Induktionskochfeld zum induktiven Beheizen von mindestens einem Kochgefäss, bestehend aus einer magnetisch durchlässigen Abdeckung und mindestens einer Kochstelle mit einer unter der Abdeckung parallel zu dieser angeordneten Spule gemäss Patentanspruch 1.

Aus der Veröffentlichung EP 0 283 850 ist eine Kochstelle mit induktiv beheizten Kochplatten bekannt. Die spezielle Anordnung von je vier kleeblattähnlich angeordneten Spulen in einer kreisförmigen Kochstelle gewährleisten eine grosse Homogenität des Magnetfeldes in unmittelbarer Nähe der Spulen. Die Kochgefässe aus ferromagnetischem Material müssen in ihrer Grundfläche möglichst genau der gesamten Spulenanordnung entsprechen, um mit gutem Wirkungsgrad beheizt werden zu können. Jede dieser Spule erzeugt ein Magnetfeld um ihr Wickelzentrum. Um die Leistung der einzelnen Magnetfelder auszunutzen muss daher ein Kochgefäss alle vier Zentren der vier Magnetfelder überdecken. Um die Kochleistung zu steuern wird eine ziemlich aufwendige Elektronikschaltung erforderlich. Auch bei Verwendung einer einzelnen herkömmlichen Spule, muss das zu verwendende Kochgefäss möglichst genau der Grundfläche der Spule entsprechen und deren Wickelzentrum vollständig überdecken. Die Kochstellen werden bevorzugterweise unterhalb einer Kochfläche beispielsweise aus Glaskeramik angeordnet. Der grosse Vorteil einer derartigen Kochstelle ist, dass nur das verwendete Kochgefäss mit seinem Inhalt erwärmt wird. Die Kochfläche selbst bleibt unbeeinflusst und erwärmt sich höchstens indirekt vom Kochgefässboden ein wenig.

Aus US 4 833 288 (Poumey) ist eine Kochstelle mit einer speziellen, sichtbaren Anordnung von flachen Induktionsspiralen unter einer Glaskeramikabdeckung bekannt. Dabei können die flachen Induktionsspiralen auch eine quadratische oder rechteckige Fläche umschreiben.

In US-A-3 786 222 (General Electric) ist ein Gerat zum induktiven Erwärmen von Fertiggerichten, die in Aluminiumfolie verpackt sind, beschrieben. Die beschriebene Induktionsspule ist in drei zentrale längliche Spulenabschnitte sowie einen, diese zentralen Spulen umgebenden, peripheren Spulenabschnitt unterteilt. Alle Spulenabschnitte zusammen sind von einem einzigen Inverter und einer Stromquelle gesteuert und gespeist.

Es ist Aufgabe der vorliegenden Erfindung, eine Induktionskochstelle so auszugestalten, dass Kochgefässe mit annähernd beliebiger Grundfläche, möglichst unabhängig von der Fläche der Spulenanordnung benutzbar sind, und dass sogar mehrere Kochgefässe auf einer Kochstelle gleichzeitig beheizt werden können. Zusätzlich soll die Steuerung der Kochleistung möglichst einfach ausführbar sein.

Diese Aufgabe löst ein Induktionskochstelle gemäss dem unabhängigen Patentanspruch.

Ein Vorteil der erfindungsgemässen Kochstelle besteht darin, dass mehrere gleichartige Spulen nebeneinander zu einem Kochfeld kombiniert werden können.

Ein weiterer Vorteil der erfindungsgemässen Kochstelle ist, dass sich eine Kochstelle über die ganze Fläche eines Kochherdes erstrecken kann, so dass eine eigentliche Kochfläche entsteht. Die Installation eigentlicher Kochflächen eignet sich besonders für Grossküchen.

Die Anordnung derartiger Kochflächen ermöglicht, eine stark vereinfachte elektrische Steuerung zu verwenden, welche sich hauptsächlich auf einen einfachen Ein/Aus-schalter pro Spule beschränken kann.

Die Erfindung wird nachstehend im Zusammenhang mit den beigefügten Zeichnungen beschrieben. Dabei zeigen:
Figur 1 eine erfindungsgemässe Kochstelle mit darauf befindlichen Kochgefässen;
Figur 2 eine Anordnung von zwei Kochstellen auf einer Kochfläche;
Figur 3 ein Kochfeld mit vier erfindungsgemässen Kochstellen, wobei jede mit einer anderen konstanten Leistung arbeitet.

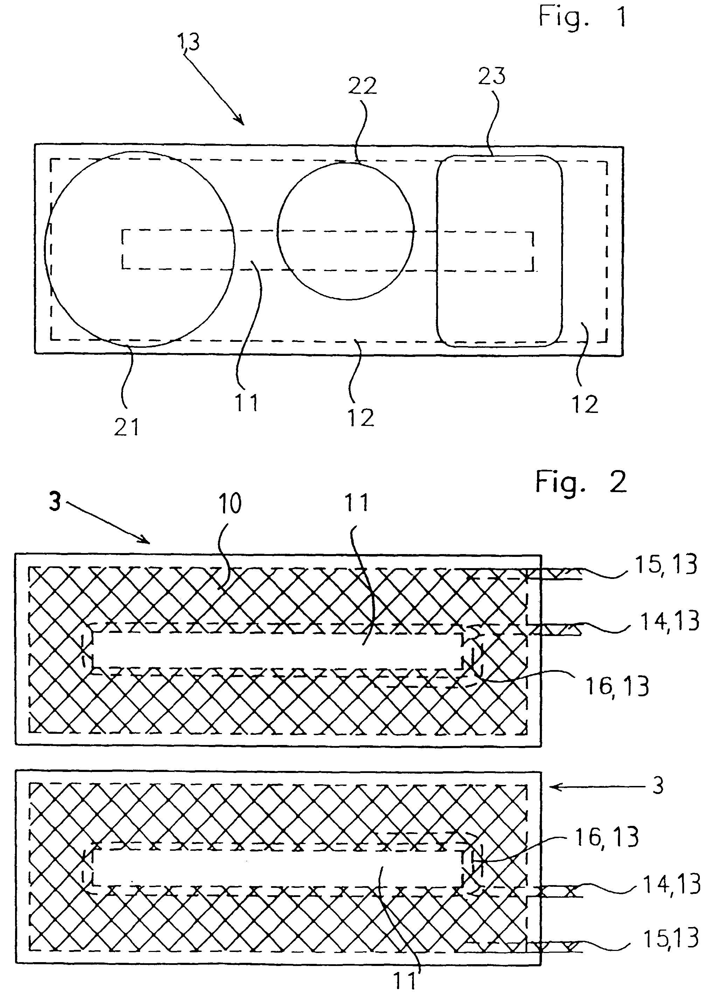

In Figur 1 ist eine Kochstelle 3 mit einer Spule und mehreren auf die Kochstelle 3 gestellten Kochgefässen 21, 22, 23 dargestellt.

Die Kochstelle 3 weist einen rechteckigen Grundriss auf. Unter einer ebenen, flächigen Abdeckung aus magnetisch durchlässigem Material befindet sich eine Spule 10. Sie ist spiralförmig um ein Wickelzentrum mit rechteckigem Querschnitt gewickelt. Sie weist nur eine Lage von Wicklungen 12 auf. Die Spule 10 besteht aus einem Bündel von mehreren Drähten mit kleinem Querschnitt. Die Länge der Spule 10 entspricht mindestens etwa zweimal ihrer Breite. Das Wickelzentrum weist eine Länge auf, die ein mehrfaches seiner Breite beträgt. Das Wickelzentrum bildet somit einen schmalen und sehr langen Luftspalt 11, welcher das Zentrum der in den Kochgefässen 21, 22, 23 zu erzeugenden magnetischen Induktion darstellt.

Die Anordnung der drei eingezeichneten Kochgefässgrundrisse 21,22,23 zeigt, dass auf der einen Kochstelle 3 nicht nur ein Kochgefäss 21, 22, 23 beheizbar ist. Jedes auf die Kochstelle 3 gestellte Kochgefäss 21, 22, 23 überquert, egal wo auf der Kochstelle 3 es hingestellt wird, immer den Luftspalt 11 der Spule 10. Sobald ein Kochgefäss 21, 22, 23 den Luftspalt 11 überdeckt, wird es mit der vollen Leistung beheizt. Somit ist ersichtlich, dass weder die Form und die Grösse der Grundfläche eines Kochgefässes, noch die Anzahl der Kochgefässe bestimmt oder begrenzt ist.

Aus Figur 2 ist ein Kochfeld 1 mit zwei erfindungsgemässen Kochstellen 3 ersichtlich. Die Zuführung 14 und die Wegführung 15 der Drahtbündel 13 und die einlagige spiralförmige Wicklung 16 um die rechteckigen Wickelzentren sind gezeigt.

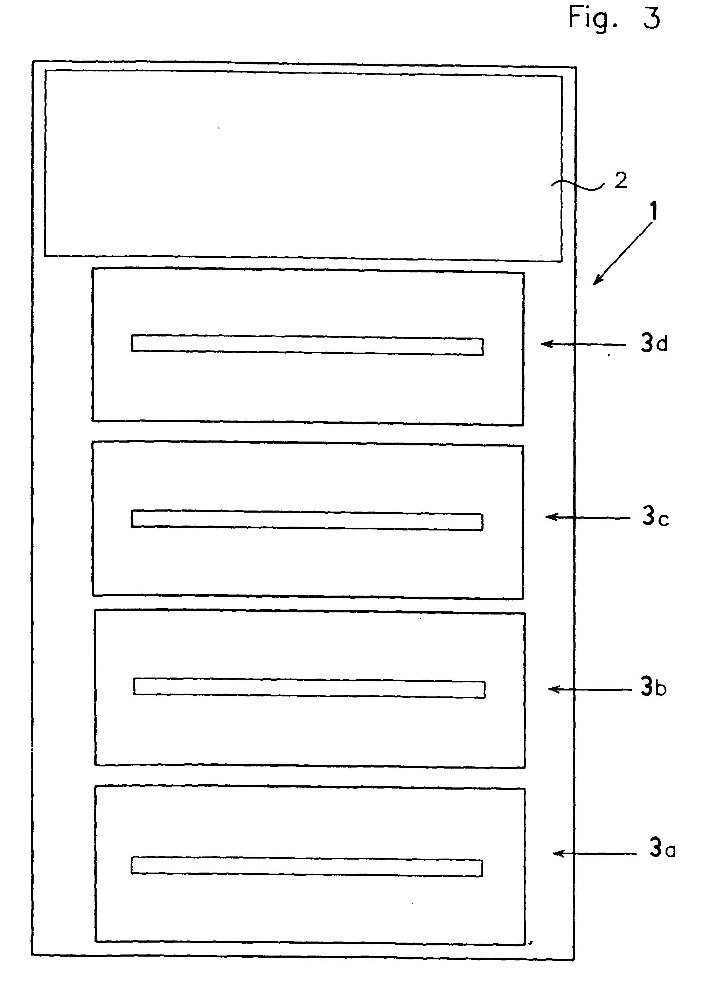

Figur 3 zeigt einen Vorschlag zur Erstellung eines grossflächigen Kochfeldes 1. Neben einer Abstellfläche 2 sind vier einzelne, erfindungsgemässe Kochstellen 3 parallel angeordnet. Unter einer gemeinsamen Abdeckung sind die vier Spulen nebeneinander angeordnet. Dabei wird eine immer mit 100%, eine mit 75%, eine mit 50% und eine mit 25% Leistung einer entsprechenden Nennleistung betrieben. Jede der Kochstellen 3 ist mit einem Ein/Aus-schalter und einer Strombegrenzung versehen, wobei jede Strombegrenzung auf einen anderen vorbestimmten Wert als Leistungsbegrenzung voreingestellt ist.

Der grosse Vorteil dieser Anordnung von mehreren, beispielsweise von vier, erfindungsgemässen Kochstellen 3a, 3b, 3c, 3d ist, dass die Leistung der einzelnen Kochstellen 3a - 3d einfach durch Strombegrenzung gesteuert und kontrolliert wird. Der Kochvorgang selbst wird durch verschieben der Kochgefässe auf dem ganzen Kochfeld 1 geregelt. Zum schnell Erhitzen wird beispielsweise ein Kochgefäss auf die erste Kochstelle la gestellt. Anschliessend wird es einfach dem Bedarf nach auf dem Kochfeld 1 in Richtung zu den Kochstellen 3a - 3d mit der geeigneten Leistung verschoben. Es ist offensichtlich, dass die Abstufung der Leistung der Kochstellen 3a - 3d nach Bedarf auch anders gewählt werden kann, oder dass mehr oder weniger als vier Kochstellen 3 auf dem Kochfeld 1 verteilt sein können.

Diese Ausführungsform eines Kochfeldes 3 benötigt keine aufwendige elektronische Steuerung. Es genügt pro Kochstelle 3, d. h. pro Spule 10, ein einfacher Ein/Aus-Schalter kombiniert mit einer Strombegrenzung nach bekannter Art. Der Ein/Ausschalter kann auch durch eine Topferkennungseinrichtung bekannter Art kombiniert oder durch eine solche automatisch betätigt werden. Die Reaktionszeit auf Aenderung der Beheizung bezogen auf das Kochgut ist äusserst kurz und im wesentlichen nur von der Wärmespeicherkapazität des jeweiligen Kochgefässes abhängig. Es empfiehlt sich dazu, die Abdeckung aus einem Werkstoff mit möglichst kleiner Wärmespeicherkapazität zu verwenden. Eine Abdeckung beispielsweise aus Glaskeramik bleibt ja von der Induktion unbeeinflusst und erwärmt sich höchstens leicht durch Uebertragung von Wärme vom Boden der Kochgefässe her.

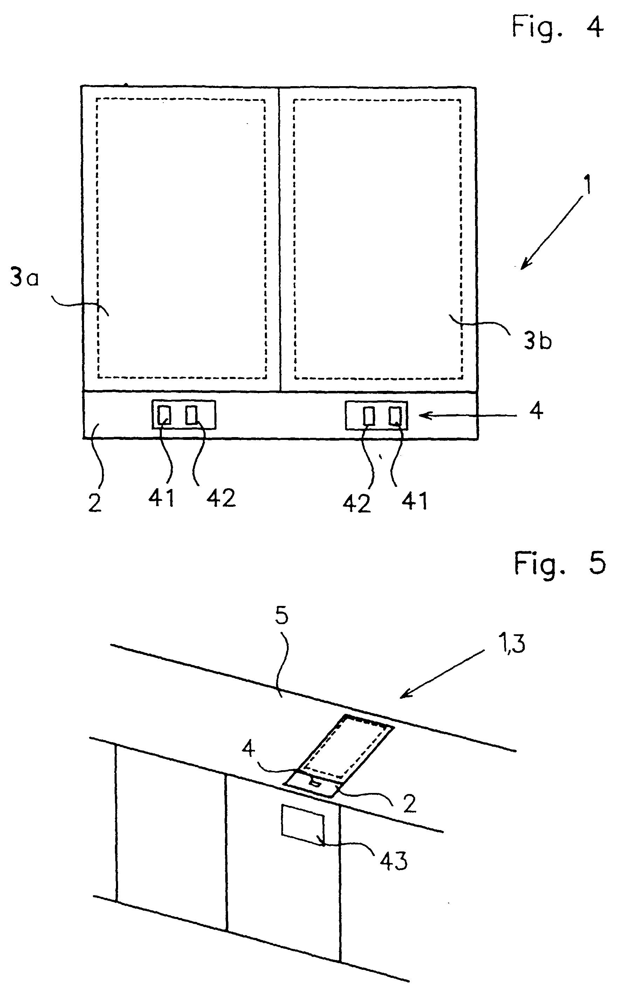

In Figur 4 ist eine weitere Anordnung von zwei Kochstellen 3a, 3b zu einem Kochfeld 1 dargestellt. Die Abstellfläche nimmt auf einem Bedienungsfeld 4 die Ein/Ausschalter und allfällige voreinstellbare Strombegrenzungschalter 41, 42 auf. Daraus ergibt sich eine einfache und bedienungsfreundliche Anordnung der zum Kochfeld 1 gehörenden Bedienungselemente auf der Oberfläche neben der Kochstellen selbst. Ein in eine Küchenkombination 5 eingebautes Kochfeld 1 mit einer Kochstelle 3 ist in Figur 5 dargestellt. Gut ersichtlich ist die oben beschriebene Anordnung des Bedienungsfeldes 4 auf der Oberfläche der Küchenkombination 5. Auf der Frontseite der Küchenkombination kann eine abdeckbare Service- oder Lüftungsöffnung angeordnet sein.

## Patentansprüche

1. Induktionskochfeld (1) zum induktiven Beheizen von Kochgefässen (21, 22, 23), bestehend aus einer magnetisch durchlässigen Abdeckung und mindestens einer Kochstelle (3) mit einer unter der Abdeckung parallel zu dieser angeordneten Spule (10), die aus einem Bündel von mehreren dünnen Drähten (13) besteht, welche spiralförmig, einlagig in rechteckiger Form um ein rechteckiges Zentrum gewickelt sind, dadurch gekennzeichnet, dass das rechtekkige Zentrum einen rechteckigen Luftspalt (11) bildet, dessen Länge ein mehrfaches seiner Breite beträgt, derart, dass mehrere Kochgefässe (21, 22, 23) entlang der Länge des Luftspaltes (11) anordnungsbar sind und die Breite des Luftspalts (11) derart ist, dass ein Kochgefäss die Breite vollständig überdecken kann.

2. Induktionskochfeld (1) nach Anspruch 1, dadurch gekennzeichnet, dass die Spule (10) ein Rechteck bildet, dessen Länge mindestens seiner zweifachen Breite entspricht.

3. Induktionskochfeld (1) nach Anspruch 2, dadurch gekennzeichnet, dass die Länge der Spule (10) annähernd der Breite des Kochfeldes (1) entspricht.

4. Induktionskochfeld (1) nach einem der Ansprüche 1 bis 3, dadurch gekennzeichnet, dass die Spule (10) durch einen Ein/Aus-schalter und eine Strombegrenzung steuerbar ist.

5. Induktionskochfeld nach einem der Ansprüche 1 bis 4, dadurch gekennzeichnet, dass mehrere Kochstellen (3) nebeneinander unter einer gemeinsamen Abdeckung angeordnet sind, und dass jede der Spulen (10) dieser Kochstellen (3) mit einem Ein/Aus-schalter und einer Strombegrenzung versehen ist, wobei jede Strombegrenzung auf einen anderen vorbestimmten Wert als Leistungsbegrenzung voreingestellt ist.

## Claims

1. Induction hob (1) for inductively heating cooking vessels (21, 22, 23), comprising a magnetically permeable cover and at least one cooking area (3) having a coil (10) which is arranged under the cover and parallel thereto and which comprises a bundle of a plurality of thin wires (13) which are wound in the form of a spiral in one layer in a rectangular shape about a rectangular centre, characterized in that the rectangular centre forms a rectangular air gap (11), whose length is a multiple of its width, in such a way that a plurality of cooking vessels (21, 22, 23) can be arranged along the length of the air gap (11) and the width of the air gap (11) is such that a cooking vessel can completely cover the width.

2. Induction hob (1) according to Claim 1, characterized in that the coil (10) forms a rectangle whose length corresponds at least to twice its width.

3. Induction hob (1) according to Claim 2, characterized in that the length of the coil (10) corresponds approximately to the width of the hob (1).

4. Induction hob (1) according to one of Claims 1 to 3, characterized in that the coil (10) can be controlled by an on/off switch and a current limiter.

5. Induction hob according to one of Claims 1 to 4, characterized in that a plurality of cooking areas (3) are arranged next to one another under a common cover, and in that each of the coils (10) of these cooking areas (3) is provided with an on/off switch and a current limiter, each current limiter being preset to a different predetermined value as a power limiter.

## Revendications

1. Plan de cuisson par induction (1) pour le chauffage par induction de récipients de cuisson (21, 22, 23), constitué d'un élément de recouvrement laissant passer les ondes magnétiques et d'au moins un poste de cuisson (3) pourvu d'une bobine (10), disposée en dessous de l'élément de recouvrement parallèlement à ce dernier, qui est constituée d'une botte de plusieurs minces fils métalliques (13) qui sont enroulés en spirale en une couche sous une forme rectangulaire autour d'un centre rectangulaire, **caractérisé** en ce que le centre rectangulaire forme un entrefer rectangulaire (11) dont la longueur est un multiple de sa largeur, de telle sorte que plusieurs récipients de cuisson (21, 22, 23) peuvent être disposés sur la longueur de l'entrefer (11), et la largeur de l'entrefer (11) étant telle qu'un récipient de cuisson peut recouvrir totalement cette largeur.

2. Plan de cuisson par induction (1) selon la revendication 1, **caractérisé** en ce que la bobine (10) forme un rectangle dont la longueur est égale à au moins deux fois sa largeur.

3. Plan de cuisson par induction (1) selon la revendication 2, **caractérisé** en ce que la longueur de la bobine (10) correspond approximativement à la largeur du plan de cuisson (1).

4. Plan de cuisson par induction (1) selon une des revendications 1 à 3, **caractérisé** en ce que la bobine (10) peut être commandée par un interrupteur marche/arrêt et une limitation de courant.

5. Plan de cuisson par induction selon une des revendications 1 à 4, **caractérisé** en ce que plusieurs postes de cuisson (3) sont disposés les uns à côté des autres en dessous d'un élément de recouvrement commun, et en ce que chacune des bobines (10) de ces postes de cuisson (3) est pourvue d'un interrupteur marche/arrêt et d'une limitation de courant, chaque limitation de courant étant préréglée à une valeur différente prédéterminée, comme limitation de puissance.
